# EUROPEAN PATENT APPLICATION

(11) **EP 2 543 704 A1**
(43) Date of publication of application: **09.01.2013**
(21) Application number: 11005543.1
(22) Date of filing: 07.07.2011
(51) Int. Cl.: C08L 27/06, C08L 23/28, C08L 27/04, C07C 6/04, C11C 3/00

(54) **Use of waxlike products of plastics processing**

(71) Applicant: Clariant International Ltd., 4132 Muttenz (CH)
(72) Inventor: Hohner, Gerd, 86152 Augsburg (DE); Herrlich, Timo, 86444 Affing (DE); Treffler, Beate, 86356 Neusaeß (DE); Fell, Rainer, 86368 Gersthofen (DE)
(74) Representative: Paczkowski, Marcus

(57) **Abstract**

The instant invention relates to the use of waxlike esters as lubricants for halogen containing thermoplastics, wherein the waxlike esters are prepared by
A) metathetic oligomerization of esters of polyols and fatty acids,
and
B) subsequent hydrogenation of the resultant reaction mixture,

at least some of the fatty acid units present in the polyol esters being singly or multiply unsaturated.

## Description

The invention relates to the use of waxes based on chemically modified fatty acid-polyol esters as lubricants for chlorinated thermoplastics.

In the processing of thermoplastic polymers it is usual to use lubricants, which on the one hand enhance the flow behavior of the polymer melt and on the other hand are intended to reduce the tendency of said melt to stick to the metallic parts of the processing machines. A particular significance is possessed by lubricants in the context of the processing of chlorinated thermoplastics such as polyvinyl chloride (PVC), for example, since plastics of this kind, on account of their sensitivity toward temperature loads and high shearing forces, and also on account of their pronounced sticking tendency, cannot be processed without lubricants.

To be distinguished from the lubricants proper is the class known as "processing aids", which are likewise used for optimizing the processing properties for PVC, but which are directed primarily at accelerating the plasticizing process and at improving the mechanical properties in the thermoelastic state. Such processing aids are generally composed of high molecular mass, polar polymers, typically of polymethyl methacrylate (see, for example, R.Gächter, H.Müller (eds.), Plastics Additives, 4th edition, 1992, p. 481ff).

Among lubricants a distinction is made between those which are highly compatible with the polymer melt and whose principal effect is therefore that of flow improvement (internal lubricants), and those which possess a greater or lesser incompatibility and which therefore accumulate at the phase boundaries, where they develop a release effect (external lubricants).

For improving the flow behavior of PVC melts there is a host of available products with internal lubricant effect, examples being fatty alcohols, fatty acids, full or partial esters of fatty acids, and fatty acid amides.

More problematic is the selection of lubricants with external effect or with combined external and internal effect, which are subject to requirements which in some cases are contradictory. In order to be effective, these lubricants must have a certain incompatibility with the PVC melt, so as to allow a release-effective film to develop between the melt and the metal parts of the processing machines. Incompatible additives, however, have the disadvantage that they often greatly cloud the end product. In the numerous applications where a highly transparent end product is desired, therefore, the limits on the amount of release agent used are frequently such that its effect is insufficient. This is particularly deleterious in the context of the production of thin PVC calender films, since on the one hand, owing to their low thermal load-bearing capacity and their tendency to stick in the hot state, a high level of lubricant usage is required in order to detach them from the rolls, and yet, on the other hand, the transparency requirements to which films of this kind are subject, in the packaging sector, for example, are particularly high.

A further precondition for the capacity for lubricant additives to be used lies in a sufficiently low volatility and high thermal stability under the processing conditions. It must not be possible for the additives to undergo volatilization at the usual temperatures of calendering, extrusion or injection molding, either in the case of excessive vapor pressures, as a result, for instance, of low molecular size, or as a result of formation of volatile decomposition products as a consequence of inadequate chemical thermostability. The volatility can be detected in a simple way, as for example via thermogravimetric analysis (TGA). A further criterion important for the quality of a lubricant additive is that in application it should not cause discoloration of the polymeric material. Experience suggests that the inherent color of the additive itself has a considerable influence on the color of the end articles.

Known lubricants for the production of plasticizer-free PVC films include the waxes known as montan waxes. Although these waxes have a balanced activity profile, they are nevertheless costly and inconvenient to produce. The starting product here is crude wax of fossil origin, which is obtained from waxy brown coal by solvent extraction, and whose composition may fluctuate, owing to its natural origin. Further processing takes place, after additional extractive purification, by costly treatment with chromosulfuric acid, resulting, as a consequence of fundamental chemical alterations, in product mixtures which are composed predominantly of long-chain carboxylic acids. These acids in turn are reacted, in subsequent synthesis steps, to form wax esters and wax soaps, which are employed as "semisynthetic" waxes for the lubricant application.

As is known, there is increasingly a desire, in the synthesis of chemical products, to employ raw materials from renewable sources and hence to move away, over the long term, from the dependency on nonrenewable fossil starting materials. This is desirable not only for reasons of future security of supply, but also from the standpoint of environmental and climate compatibility.

Fatty-acid-based PVC lubricants which fulfill this requirement at least in part are known. Hence for a long time there has been use of fatty acids and of esters, amides, and soaps derived from them (R.Gächter, H.Müller (eds.), Plastics Additives, 4th edition 1992, p. 423 ff). Also known are what are called complex esters or mixed esters of aliphatic or aromatic dicarboxylic acids having 2 to 22 carbon atoms, aliphatic polyols having 2 to 6 hydroxyl groups, and aliphatic monocarboxylic acids having 12 - 30 C atoms (GB 1292548), and also mixed esters of aliphatic diols, aliphatic or aromatic polycarboxylic acids having 2 to 6 carboxyl groups, and aliphatic monofunctional alcohols having 12 to 30 carbon atoms (GB 1450273).

These lubricants, however, do not in all aspects meet the desired performance requirements, with regard, among other things, to the desired balanced combination of internal and external lubricant effect, low volatility, etc.

It has now been found that waxlike ester compounds which are prepared by means of metathesis and subsequent hydrogenation of olefinic double bonds from polyol esters of fatty acids, especially from natural fats, are suitable in a particularly advantageous way as lubricants for the processing of halogen containing thermoplastics.

The metathesis reaction is a well-established catalytic process for the chemical conversion or structural reorganization of olefin molecules. It involves the substituents present on the olefinic double bonds being exchanged in the manner of a transalkylidenation. Catalysts used are heterogeneous or homogeneous transition metal compounds, usually in combination with activating cocatalysts.

When applied to natural unsaturated fats, this leads essentially to intramolecular ring-closure reactions within one triglyceride unit, or to intermolecular oligomerizations with participation of two or more triglyceride molecules. Complex mixtures are formed of cyclic triglycerides and oligotriglycerides. The conversions are always associated with elimination of olefinic hydrocarbons.

Waxlike products prepared by metathesis from esters of polyols and unsaturated fatty acids, of the kind available, for example, as soybean oil, palm oil, sunflower oil, etc., from natural renewable sources of raw materials, have already been described. The metathesis products, where appropriate following hydrogenation of the double bonds, may be used as a component of candle material (WO 2006/076364) or cosmetic emulsions (WO 2007/103398). The latter document also mentions the possibility of using such materials as processing aids in PVC.

A method for the metathetic conversion of polyol esters and fats with subsequent hydrogenation is disclosed in WO 2007/081987.

US-2010/0160506 describes the cross-metathesis of fats and fatty oils with olefins. The short-chain triglycerides that are obtained in this procedure can be used as plasticizers in PVC.

The use of metathetized hydrogenated fatty acid polyol esters as lubricants in PVC or other halogen containing thermoplastics has not hitherto been described.

The invention accordingly provides for the use of waxlike esters as lubricants for halogen containing thermoplastics, wherein the waxlike esters are prepared by
A) metathetic oligomerization of esters of polyols and fatty acids,
   and
B) subsequent hydrogenation of the resultant reaction mixture,
   at least some of the fatty acid units present in the polyol esters being singly or multiply unsaturated, and, optionally, wherein after step A or step B volatile hydrocarbons are removed.

Raw materials used are fatty acid esters of polyols. By fatty acids are meant carboxylic acids having a chain length of higher than C3, which are obtainable on the one hand from natural fats and fatty oils, but on the other hand can also be obtained synthetically. Depending on the length of the carbon chains, distinctions are made between lower (about C4 to C7), medium (about C8-C12), and higher (higher than C12) fatty acids. The fatty acids may be both unbranched and branched.

With respect to the amount of olefinic double bonds, a further distinction is made between saturated and unsaturated fatty acids. Unsaturated fatty acids may in turn contain one or more double bonds (singly or multiply unsaturated fatty acids).

Examples of saturated fatty acids are butyric, caproic, caprylic, capric, lauric, myristic, palmitic, margaric, stearic, arachidic, behenic, and lignoceric acid; examples of unsaturated fatty acids include undecylenic, palmitoleic, oleic, elaidic, petroselinic, gadoleic, icosenic, cetoleic and erucic acid (singly unsaturated acids) and also linoleic, alpha- and gamma-linolenic, arachidonic, and cervonic acid (multiply unsaturated acids). In addition to the carboxyl group they may also carry further functional groups, such as hydroxyl groups or keto groups, for example. An example of a hydroxyl-containing naturally occurring fatty acid is ricinoleic acid.

Metathetic reactions are of course possible only with unsaturated fatty acid units, and so only those with at least partly unsaturated character are contemplated as polyol ester raw materials for the metathesis products used in accordance with the invention. This means either that 100% of the fatty acid residues present in the polyol ester are singly or multiply unsaturated, or that as well as a fraction of unsaturated structures there are also saturated structures present. The particular ratio of unsaturated to saturated chains is arbitrary.

By polyols are meant carbon compounds having at least two hydroxyl groups and at least two carbon atoms. Examples of polyols are ethanediol, 1,2-propanediol, 1,3-propanediol, the possible isomers of butanediol, of pentanediol, e.g., neopentylglycol, of hexanediol, glycerol, trimethylolpropane, ditrimethylolpropane, pentaerythritol, and sorbitol.

Preferred polyester raw materials are naturally occurring glycerol esters of at least partially unsaturated character, i.e., triglycerides of fatty acids, at least some of the fatty acids present being singly or multiply unsaturated.

In principle it is possible to use all naturally occurring fats and fatty oils or those obtained from genetically modified organisms. Examples of fats of animal origin are bovine or porcine tallow, while examples of suitable vegetable fats include soybean oil, palm oil, rapeseed oil, safflower oil, jatropha oil, castor oil, corn oil, hempseed oil, sunflower oil, cottonseed oil, palm kernel oil, peanut oil, coconut oil, olive oil, colza oil or coconut fat. Also possible are any desired mixtures of such fats and fatty oils, as are modified - e.g., partially hardened - fats and oils, or mixtures of natural fats and oils with synthetic polyol esters.

The procedure for the metathesis of fatty acid esters is prior art and has been described in numerous publications; see, for example, van Dam, Mittelmeijer, Boelhower, J.Chem.Soc.Chem.Commun. 1972, 1121; Erhan, Bagby, Nelsen, J.Am.Oil Chem.Soc. 1997, 74, 703 or in the patent publications WO 2006/076364 and WO 2007/081987 already cited earlier on above. Catalysts used for this purpose are transition metal compounds, both in supported form and in unsupported form. By way of example, mention may be made here of ruthenium complexes (catalysts of the Grubbs or Hoveyda-Grubbs type), with suitability also being possessed by activated tungsten compounds and molybdenum compounds, examples being the hexachlorides of these metals, and also rhenium compounds, e.g., dirhenium heptoxide, supported on aluminum oxide. The reaction is carried out with or without solvent, preferably without solvent, at temperatures between 0 and 150 °C (Grubbs, Hoveyda-Grubbs, tungsten, and molybdenum systems) or between 50 and 300 °C (supported rhenium systems). The amount of catalyst used, depending on the substrate material, on the catalyst type and on the reaction conditions, is between 10 ppm and 5 % by weight. The reaction takes place preferably in the absence of air and moisture, in an inertized atmosphere. The catalyst can be separated off after the end of the reaction. The metathesis can be carried out without pressure or under pressure, batchwise or continuously.

The metathesis reaction is followed by a catalytic hydrogenation of the olefinic double bonds present in the reaction products.

For the hydrogenation reaction it is possible to use all of the methods that are suitable and known from the prior art. It is possible for this purpose to use heterogeneous or homogeneous catalysts. For the heterogeneous type, there are metals or metal compounds applied, for example, to carrier materials such as activated carbon, aluminum oxide or kieselguhr, examples being noble metals such as platinum, palladium, and rhenium, or non-noble transition metals such as molybdenum, tungsten, and chromium, and also iron, cobalt, and nickel. Contemplated more particularly are Raney nickel, activated carbon-supported palladium, platinum or zinc oxide. For homogeneous catalysis, suitability is possessed, for example, by transition metal complexes with a more or less complex ligand structure adapted to the particular task. The hydrogenation can be carried out without pressure or under pressure, at ambient temperature or elevated temperature, with or without solvent, batchwise or continuously.

The products of the metathesis reaction, alongside olefinically unsaturated triglyceride compounds of new structure, include olefinic hydrocarbons as by-products. Where the raw material contains oleic esters, 9-octadecene, for example, is formed, and multiply unsaturated fatty acid components also yield shorter-chain alkenes and also cyclic alkenes. These comparatively volatile hydrocarbons can be removed from the metathesis product before the hydrogenation step, by means of stripping or distillation, for example, and reduced pressure may be applied in order to increase the effectiveness. Where the olefinic hydrocarbons remain in whole or in part in the metathesis product, they are converted, when that product is hydrogenated, into saturated paraffinic hydrocarbons (alkanes), which again may be removed, in the same way. For the preparation of the metathesis products it is preferred to carry out such removal, optionally before or after the hydrogenation stage.

The metathetized and hydrogenated waxlike polyol esters are used as lubricants or release agents in halogen containing, especially chlorine containing thermoplastics, such as polyvinyl chloride, for example, which can be prepared by known processes - suspension, bulk, and emulsion polymerization, for example. As well as for polyvinyl chloride they are also suitable for copolymers of vinyl chloride with up to 30 % by weight of comonomers, examples being vinyl acetate, vinylidene chloride, vinyl ethers, acrylonitrile, acrylic esters, maleic monoesters or diesters or olefins, and also for graft copolymers of PVC. In addition the chlorine-containing thermoplastics comprise also chlorinated polyvinyl chloride CPVC as well as chlorinated polyolefins like chlorinated polyethylene CPE and chlorinated copolymers of ethylene and propylene.

The quantity of the waxlike ester is 0.05 % to 5.0 % by weight, based on the polymer. If the molding compound is based on B- or S-PVC (bulk or suspension PVC), then the quantity is preferably 0.05 % to 1 % by weight; if it is based on E-PVC (emulsion PVC), then this quantity is preferably 1.0 % to 5 %, more particularly 2 % to 4 %, by weight, based in each case on the polymer. The incorporation of the copolymers of the invention into the polymers is accomplished in the usual way during the preparation or processing of the molding compounds.

Besides the metathetized hydrogenated polyol esters, the PVC composition may further comprise other lubricants as well, examples being semisynthetic montan waxes, paraffinic hydrocarbons, polyolefin waxes, oxidized or otherwise modified polyolefin waxes, examples being polyolefin waxes with polar modification by free-radical grafting, and also fatty compounds such as fatty acids, fatty acid salts, and fatty acid amides. As additional lubricants, contemplation is also given to reaction products of relatively long-chain alpha-olefins with unsaturated monobasic or polybasic carboxylic acids such as acrylic acid, methacrylic acid or maleic acid or with the derivatives of such carboxylic acids such as esters or anhydrides. The different lubricants can be used in any desired proportions, with the total lubricant content being between 0.05 % and 5 % by weight.

The PVC composition may further comprise fillers, plasticizer, heat stabilizers, antioxidants, light stabilizers, antistats, flame retardants, reinforcing materials, pigments, dyes, processing aids, impact modifiers, blowing agents or optical brighteners, in conventional amounts.

### Examples:

The melt viscosities were determined in accordance with DIN 53019-2 with a rotation viscometer, and the dropping points were determined in accordance with DIN ISO 2176. The acid number was determined in accordance with DIN 53402, while the saponification number was measured in accordance with DIN standard 53401. The TGA measurements were carried out using an SD TA 551e instrument from Mettler (temperature program: heating to 300 °C at a heating rate of 5 °C/min and subsequent dwell time of 30 minutes at this temperature, in a nitrogen stream of 50 ml/min. The numerative measure of the volatility is the percentage loss of mass then occurring.)

For the examples in accordance with the invention, a metathetized hydrogenated soybean oil was used (sample A). Furthermore, a product produced from this material by removal of volatile fractions under reduced pressure was used (sample B; distillation in a thin-film evaporator with a bath temperature of 190 °C under a pressure of 0.5 mbar; distillate yield 10 % by weight). The properties of the test products are as follows:

**Table 1: Test products**

| | Acid number | Saponification number | Dropping point | Visc. 90 °C | Loss of mass/TGA |
|---|---|---|---|---|---|
| | [mg KOH/g] | [mg KOH/g] | [°C] | [mPa.s] | [% by weight] |
| Sample A | 0 | 204 | 53 | 58 | 12.1 |
| Sample B | 0 | 214 | 50 | 82 | 7.9 |

Reference samples for the noninventive, comparative examples were the following commercial PVC lubricants:

**Table 2: Reference samples**

| | Manufacturer | Loss of mass/TGA [% by weight] |
|---|---|---|
| Licowax^{®} E | Clariant | 15.9 |
| Loxiol^{®} G 72 | Emery Oleochemicals | 19.9 |

### Performance tests

PVC formulas corresponding to Tables 3 and 4 were subjected to preliminary mixing in a laboratory mixer and then processed to rolled sheets on a Collin measuring roll unit of type 150 M (Dr. Collin GmbH). In each case, 220 g of the additized PVC mixture were used, and the processing temperature was 195 °C. After a running time of 20 minutes, measurements were made of the sticking force. The mixtures of the respective test formulas were further compressed to form plates with a layer thickness of 0.5 mm (Collin laboratory plate press 200P, pressing temperature 180 °C, pressing pressure 200 bar). Measurements were made of the transparency of these plates.

**Table 3: PVC test formula, Sn-stabilized**

| | | |
|---|---|---|
| PVC S 3160 (K value 60, Vinnolit) | [phr] | 100 |
| Kane Ace B-58 A (impact modifier, Kaneka) | [phr] | 5 |
| Mark 17 MOK (tin stabilizer, Crompton) | [phr] | 1.5 |
| Paraloid K 120N (processing aid, Rohm and Haas) | [phr] | 1.0 |
| Loxiol G 16 (glycerol dioleate, Emery Oleochemicals) | [phr] | 0.5 |
| Test product | [phr] | 0.3 |

**Table 4: PVC test formula, Ca/Zn-stabilized**

| | | |
|---|---|---|
| PVC S 3160 (K value 60, Vinnolit) | [phr] | 100 |
| Kane Ace B-58 A (impact modifier, Kaneka) | [phr] | 5 |
| ADK RX-400 (Ca/Zn stabilizer, Adeka Palmerole) | [phr] | 3.0 |
| Paraloid K 120N (processing aid, Rohm and Haas) | [phr] | 1.0 |
| Loxiol G 16 (glycerol dioleate, Emery Oleochemicals) | [phr] | 0.3 |
| Test product | [phr] | 0.3 |

**Table 5: Test results in Sn-stabilized formula as per Table 3**

| | Mixture sticks after [sec] | Transparency [%] |
|---|---|---|
| Example 1 (inventive): test product sample A | 675 | 89.1 |
| Example 2 (inventive): test product sample B | 741 | 89.2 |
| Example 3 (comparative, not inventive): test product Licowax^{®} E | 703 | 89.8 |
| Example 4 (comparative, not inventive): test product Loxiol^{®} G 72 | 705 | 89.6 |

**Table 6: Test results in Ca/Zn-stabilized formula as per Table 4**

| | Mixture sticks after [sec] | Transparency [%] |
|---|---|---|
| Example 5 (inventive): test product sample B | 1400 | 81 |
| Example 6 (comparative, not inventive): test product Licowax^{®} E | 1100 | 81 |

## Claims

1. The use of waxlike esters as lubricants for halogen containing thermoplastics, wherein the waxlike esters are prepared by
A) metathetic oligomerization of esters of polyols and fatty acids,
and
B) subsequent hydrogenation of the resultant reaction mixture,
at least some of the fatty acid units present in the polyol esters being singly or multiply unsaturated.

2. The use as claimed in claim 1, wherein after step A or step B volatile hydrocarbons are removed.

3. The use as claimed in claim 1 or 2, wherein natural, vegetable or animal fats or fatty oils are used as raw material for the metathetic oligomerization.

4. The use as claimed in one or more of claims 1 to 3, wherein vegetable fats used are soybean oil, palm oil, safflower oil, jatropha oil, castor oil, corn oil, hemp seed oil, rapeseed oil, sunflower oil, cottonseed oil, palm kernel oil, peanut oil, coconut oil, olive oil, colza oil, coconut fat or mixtures thereof.

5. The use as claimed in claim 1, wherein the halogen containing thermoplastics are polyvinylchloride PVC, chlorinated polyvinylchloride CPVC, chlorinated polyethylene CPE, chlorinated copolymers of ethylene and propylene, polyvinylidene chloride PVdC or copolymers of vinyl chloride with up to 30 % by weight of comonomers, the latter selected from the group of vinyl acetate, vinylidene chloride, vinyl ethers, acrylonitrile, acrylic esters, maleic monoesters or diesters or olefins.

6. The use as claimed in claim 1 or 2, wherein the waxlike esters are used in an amount between 0.5 % and 5 % by weight, based on the halogen containing thermoplastic.

7. The use as claimed in claim 1 or 2, wherein the waxlike esters are used in combination with other lubricants.

8. The use as claimed in one or more of claims 1 to 6, wherein the waxlike esters in halogenated thermoplastics further comprise fillers, plasticizer, heat stabilizers, antioxidants, light stabilizers, antistats, flame retardants, reinforcing materials, pigments, dyes, processing aids, impact modifiers, blowing agents or optical brighteners, in conventional amounts.
